(19) Europäisches Patentamt
European Patent Office
Office européen des brevets

(11) **EP 3 007 108 B1**

(12) **FASCICULE DE BREVET EUROPEEN**

(45) Date de publication et mention
de la délivrance du brevet:
**21.12.2016 Bulletin 2016/51**

(51) Int Cl.:
**G06K 19/06** *(2006.01)*

(21) Numéro de dépôt: **15188462.4**

(22) Date de dépôt: **06.10.2015**

(54) **GÉNÉRATION D'UN CODE GRAPHIQUE MATRICIEL PERSONNALISÉ ROBUSTE**

ERZEUGUNG EINES ROBUSTEN PERSONALISIERTEN MATRIX-GRAFIKCODES

GENERATION OF A ROBUST PERSONALISED GRAPHIC MATRIX CODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2014 FR 1459709**

(43) Date de publication de la demande:
**13.04.2016 Bulletin 2016/15**

(73) Titulaire: **Lynkware**
**77700 Magny Le Hongre (FR)**

(72) Inventeur: **PANZA, Mauro**
**77700 Magny Le Hongre (FR)**

(74) Mandataire: **Cabinet Plasseraud**
**66, rue de la Chaussée d'Antin**
**75440 Paris Cedex 09 (FR)**

(56) Documents cités:
**EP-A2- 1 154 373      EP-A2- 1 847 945**
**WO-A1-2007/124648**

**Description**

La présente invention concerne le domaine des codes à barres et en particulier des codes à barres bidimensionnels tels que des codes graphiques, à lecture optique.

Le « QR Code » (pour « *Quick Response Code* » en anglais) est un code graphique matriciel de la famille des codes à barres, initialement inventé afin de tracer le chemin de pièces détachées dans des usines de fabrication automobiles. Le QR code est plus précisément un code à barres bidimensionnel se présentant sous la forme d'une matrice constituée par des carrés juxtaposés clairs et sombres appelés « modules ». Les couleurs respectives des modules déterminent le code représenté. Des motifs communs à tous les QR codes permettent en outre d'indiquer ses caractéristiques (taille, orientation, position, etc).

Le QR code se décode au moyen d'un dispositif pouvant intégrer une caméra CCD (pour « *Charged Coupled Device* » en anglais), tel qu'un scanneur de codes à barres industriel, une tablette tactile, un Smartphone, ou encore un ordinateur doté d'une webcam.

Le QR code présente l'avantage d'être lu rapidement, d'être robuste (il peut être décodé même si une partie du code est corrompue ou manquante), de pouvoir stocker plus d'informations qu'un code à barres linéaire traditionnel et, en combinaison avec un logiciel de décodage, il a l'avantage de déclencher automatiquement des actions comme renvoyer à un site internet via un lien URL (l'usage le plus populaire en pratique), récupérer une carte virtuelle, obtenir des coordonnées Wi-fi ou une position géographique, etc.

Ainsi, le QR code établit un lien entre le monde physique (une affiche, une étiquette sur un produit, un catalogue, une carte de visite, etc) et le monde numérique.

Le succès lié à l'utilisation du QR code, dans le domaine marketing notamment, a fait émerger un besoin de réduire la taille du QR code et d'améliorer l'aspect graphique du code.

Dès lors, les QR codes ont évolué de simples codes en noir et blanc, à des codes en couleur, puis à des codes avec des incrustations d'images (logo d'une marque par exemple), et enfin à des codes stylisés graphiquement et plus attractifs.

Le document EP 1 154 373 A2 divulgue un procédé de génération d'un tel code.

Toutefois, la stylisation des QR codes est le plus souvent faite dans la méconnaissance des spécifications du code, provoquant ainsi une lecture difficile voire impossible du code.

Ainsi, la personnalisation des QR codes est faite au détriment de la de la lisibilité du code, les personnalisations les plus répandues étant l'ajout de couleurs, la déformation des modules et/ou des motifs, l'incrustation de logos, etc.

Il est cependant essentiel que le QR code demeure facilement et rapidement décodable, de légères modifications apportées à sa structure pouvant le rendre illisible.

Il existe ainsi un besoin de personnaliser des codes graphiques matriciels tout en maintenant leur niveau de lisibilité.

La présente invention vient améliorer la situation.

Un premier aspect de l'invention concerne un procédé de génération d'un code graphique selon la revendication 1.

L'invention propose ainsi de générer un code graphique matriciel personnalisé à partir d'un premier code graphique matriciel de type QR code, et d'une image (en noir et blanc ou en couleur). L'invention tire avantageusement partie des similitudes qui peuvent exister entre des pixels du premier code graphique matriciel et des paramètres de pixels de l'image afin de privilégier l'affichage de l'image, évitant ainsi sa dénaturation dans le deuxième code graphique matriciel, tout en conservant le même niveau de lisibilité que le premier code graphique matriciel. Ainsi, certains pixels des modules du premier code graphique sont « éliminés » afin de faire ressortir l'image. Une telle sélection correspond à la deuxième optimisation décrite dans ce qui suit.

On entend par « différence » la valeur absolue entre le paramètre du premier pixel et le paramètre du deuxième pixel.

On entend par paramètre de pixel toute caractéristique du pixel permettant de différencier les pixels clairs des pixels foncés (ou pixels blancs ou noirs), en vue de la lecture du code.

Selon un mode de réalisation de l'invention, les paramètres de pixels peuvent être des niveaux de gris des premier et deuxième pixels et chaque pixel du premier code graphique matriciel peut être noir ou blanc.

Selon un mode de réalisation, le procédé peut en outre comprendre une étape de décomposition de chaque module du premier code graphique matriciel en une zone centrale comprenant au moins un pixel du module et une zone périphérique comprenant les autres pixels du module, l'étape de sélection peut être appliquée aux pixels des zones centrales de l'ensemble des modules, et, pour chaque correspondance entre un pixel d'une zone périphérique d'un module du premier code graphique matriciel avec un pixel de l'image, le pixel de l'image peut être ajouté au deuxième code graphique matriciel.

Ainsi, seule une zone centrale de chaque module peut être réservée à la lecture du code, la zone périphérique permettant de faire ressortir l'image. Une telle réalisation tire partie de l'amélioration de la résolution des dispositifs de lecture (caméra de téléphone) apte à décoder des modules de taille restreinte. Un tel mode de réalisation correspond à la première optimisation décrite ci-après.

Dans un mode de réalisation de l'invention, si la différence est supérieure au seuil prédéfini, le pixel ajouté au deuxième code graphique peut être déterminé par les étapes suivantes :

- modification de la luminance du deuxième pixel de manière à ce que la différence entre le paramètre du premier pixel et le paramètre du deuxième pixel soit inférieure au seuil ;
- ajout du deuxième pixel modifié de l'image au deuxième code graphique matriciel.

Ainsi, la modification de la luminance du deuxième pixel de l'image permet de limiter la dénaturation de l'image dans le deuxième code graphique matriciel tout en conservant le même niveau de lisibilité que celui du premier code graphique matriciel. Un tel mode de réalisation correspond à la troisième optimisation décrite ci-après.

En variante, si la différence est supérieure au seuil prédéfini, le pixel ajouté au deuxième code graphique peut être obtenu par les étapes suivantes :

- modification du deuxième pixel en lui attribuant un indice d'opacité différent de 1 de manière à ce que la différence entre un paramètre d'une superposition du deuxième pixel sur le premier pixel et le paramètre du deuxième pixel soit inférieure au seuil;
- superposition du deuxième pixel modifié sur le premier pixel de manière à obtenir le pixel ajouté au deuxième code graphique matriciel.

Cette variante permet de corriger les inconvénients de la troisième optimisation, la modification de la luminance d'un pixel pouvant conduire à changer le rendu du pixel (un pixel brun foncé dont la luminance est augmentée pouvant devenir jaune par exemple). L'utilisation de l'opacité permet de conserver la teinte de l'image dans le deuxième code graphique matriciel tout en conservant le même niveau de lisibilité que celui du premier code graphique matriciel. Dans cette variante, l'indice d'opacité est défini comme étant compris entre 0 et 1, la valeur 0 traduisant un pixel totalement transparent et la valeur 1 traduisant un pixel totalement opaque.

Un tel mode de réalisation correspond à la deuxième réalisation de la troisième optimisation décrite ci-après.

En complément, l'indice d'opacité attribué peut être inversement proportionnel à la différence entre le paramètre du premier pixel et le paramètre du deuxième pixel.

La modification apportée au deuxième pixel de l'image est donc plus importante lorsque l'écart avec le paramètre du premier pixel du premier code graphique est grand, ce qui assure un niveau de lisibilité homogène du deuxième code graphique matriciel.

Selon un mode de réalisation de l'invention, les dimensions en nombre de pixels du premier code graphique matriciel peuvent être inférieures aux dimensions de l'image, seule une partie de l'image étant ainsi en correspondance avec le premier code graphique matriciel, et une partie complémentaire de l'image n'étant pas mise en correspondance avec des pixels du premier code graphique matriciel peut être ajoutée au deuxième code graphique.

Une telle réalisation permet de tirer partie de l'amélioration des capacités des dispositifs de lecture de codes graphiques matriciels, qui permettent la miniaturisation de la partie codée dans le deuxième code graphique matriciel. Cette réalisation correspond à la cinquième optimisation décrite ci-après.

En complément, une bande de pixels blancs d'une largeur d'au moins un module peut être ajoutée dans le deuxième code graphique, la bande entourant au moins partiellement une zone correspondant aux pixels mis en correspondance entre le premier code graphique matriciel et l'image.

Une telle réalisation permet d'améliorer la détection de la partie codée (partie comprenant les pixels mis en correspondance) dans le deuxième code graphique matriciel.

En complément, la bande de pixels blancs peut avoir une largeur d'un module.

Une telle réalisation permet de tirer partie de l'amélioration des capacités des dispositifs de lecture de codes graphiques matriciels, en minimisant la largeur de la bande de pixels blancs à la valeur minimale requise pour la détection de la partie codée du deuxième code graphique matriciel. La dénaturation de l'image dans le deuxième code graphique matriciel est ainsi minimisée.

Selon un mode de réalisation de l'invention, le premier code graphique matriciel peut comprendre l'un des éléments suivants ou toute combinaison parmi les éléments suivants :

- des motifs gradués pour densifier le premier code graphique matriciel ;
- des séparateurs séparant les motifs gradués de la partie restante du premier code graphique matriciel ;
- des motifs d'alignement permettant de corriger la distorsion en cas de pliage ou courbage du premier code graphique matriciel ;
- des motifs sombres de couleur noire situés à des endroits prédéfinis du premier code graphique matriciel.

L'étape de sélection peut être appliquée aux pixels de l'élément ou des éléments du premier code graphique matriciel.

Ainsi, les optimisations selon l'invention peuvent être appliquées aux éléments structurants du premier code graphique matriciel de manière à minimiser la dénaturation de l'image dans le deuxième code graphique matriciel.

Dans un mode de réalisation de l'invention, les couleurs du premier code graphique matriciel peuvent coder :

- un lien URL vers un site internet ;
- des coordonnées de réseau Wi-fi ;
- une position géographique ;
- une carte de visite (Vcard, MeCard etc.) ;
- une adresse mail et son texte ;
- un numéro de téléphone ;
- un message court de type SMS par exemple (pour « *Short Message Service* » en anglais) ;
- du texte ;
- planification d'un évènement dans un agenda (calendrier).

Un deuxième aspect de l'invention concerne un programme d'ordinateur comportant des instructions pour la mise en oeuvre du procédé selon le premier aspect de l'invention, lorsque ce programme est exécuté par un processeur.

Un troisième aspect de l'invention concerne un dispositif de génération d'un code graphique matriciel personnalisé, le dispositif comprenant les étapes suivantes :

- une première interface pour la réception d'une image comprenant un ensemble de pixels ;
- une deuxième interface pour la réception d'un premier code graphique matriciel, le premier code graphique matriciel comprenant un ensemble de modules, chaque module comprenant un ensemble de pixels d'une couleur donnée, le code étant défini par la couleur donnée.

Le dispositif peut comprendre en outre un processeur apte à mettre en oeuvre une étape de mise en correspondance de chaque pixel du premier code graphique matriciel avec un pixel de l'image et une étape de sélection de pixels du matriciel graphique pour la génération d'un deuxième code graphique matriciel personnalisé, l'étape de sélection comprenant les étapes suivantes, pour au moins une correspondance entre un premier pixel donné du code graphique matriciel et un deuxième pixel de l'image :

- comparaison d'une différence entre un paramètre du premier pixel et un paramètre du deuxième pixel avec un seuil prédéfini ;
- si la différence est inférieure ou égale au seuil prédéfini, ajout du deuxième pixel de l'image au deuxième code graphique matriciel ;
- si la différence est supérieure au seuil prédéfini, déterminer un pixel du deuxième code graphique matriciel en fonction du premier pixel et du deuxième pixel.

D'autres caractéristiques et avantages de l'invention apparaîtront à l'examen de la description détaillée ci-après, et des dessins annexés sur lesquels:

- la figure 1 est un diagramme illustrant les étapes d'un procédé de génération d'un code graphique matriciel personnalisé selon un mode de réalisation de l'invention;
- les figures 2a à 2j illustrent des exemples de décomposition des modules d'un premier code graphique matriciel en fonction de la taille des modules ;

- la figure 3 illustre les résultats de l'application de première et deuxième optimisations à une image et à un premier code graphique matriciel, selon un mode de réalisation de l'invention, permettant d'obtenir un deuxième code graphique matriciel ;
- la figure 4 illustre les résultats de l'application de première, deuxième et troisième optimisations à une image et à un premier code graphique matriciel comprenant des motifs prédéfinis, selon un mode de réalisation de l'invention ;
- la figure 5 illustre les résultats de l'application d'une cinquième optimisation à une image et à un premier code graphique matriciel, selon un mode de réalisation de l'invention, permettant d'obtenir un deuxième code graphique matriciel ;
- la figure 6 illustre un dispositif de génération d'un code graphique matriciel personnalisé selon un mode de réalisation de l'invention.

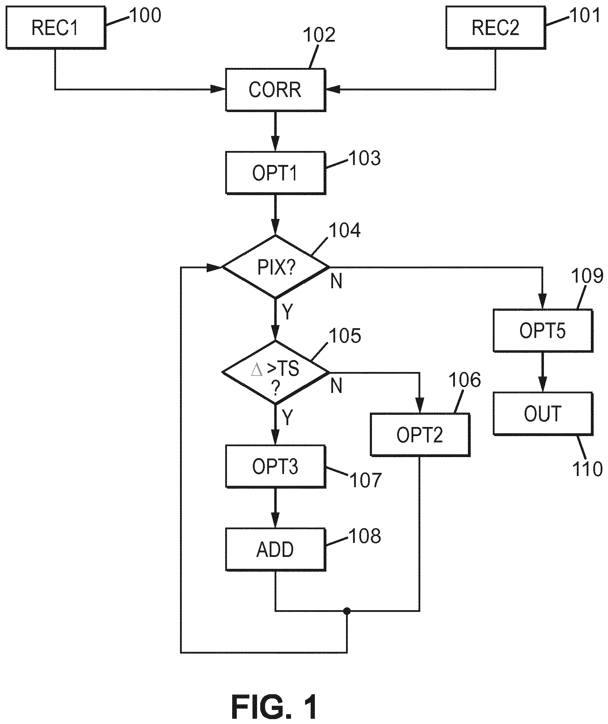

La figure 1 est un diagramme illustrant les étapes d'un procédé de génération d'un code graphique matriciel personnalisé selon un mode de réalisation de l'invention.

A une étape 100, une image comprenant un ensemble de pixels est reçu. Aucune restriction n'est attachée au format de l'image. Les pixels peuvent être des pixels en couleur ou en niveau de gris.

A une étape 101 (qui peut être indifféremment antérieure ou postérieure à l'étape 100), un premier code graphique matriciel, tel qu'un QR code par exemple, est reçu. Le premier code graphique comprend un ensemble de modules, chaque module comprenant un ensemble de pixels d'une couleur donnée. L'agencement des modules clairs et sombres définit le code du premier code graphique matriciel. Un tel code peut constituer un lien URL vers un site internet, des coordonnées de réseau Wi-fi, une position géographique, une carte de visite (Vcard, MeCard etc.), une adresse mail et son texte, un numéro de téléphone, un message court de type SMS par exemple (pour *« Short Message Service »* en anglais), du texte, une planification d'un évènement dans un agenda (calendrier), etc. Dans ce qui suit, l'exemple de modules pouvant prendre une couleur noire ou blanche est considéré à titre illustratif.

A une étape 102, chaque pixel du premier code graphique matriciel est mis en correspondance avec un pixel de l'image. A cet effet, les dimensions de l'image (en nombre de pixels) sont au moins égales aux dimensions du premier code graphique matriciel. Un couple de pixels en correspondance peut être vu comme des pixels en vis-à-vis lorsque le premier code graphique matriciel et l'image sont superposés.

A partir de l'image et du premier code graphique matriciel, l'invention prévoit la construction d'un deuxième code graphique matriciel codant le même code que le premier code graphique matriciel, et dont l'aspect est le plus proche possible de l'image, tout en conservant un niveau de robustesse et de lisibilité élevé du code. A cet effet, l'invention comprend une étape de sélection de pixels du premier code graphique matriciel pour la génération d'un deuxième code graphique matriciel personnalisé. Ainsi, pour certaines correspondances entre un premier pixel du premier code graphique matriciel et un deuxième pixel de l'image, seul le deuxième pixel de l'image est utilisé pour la construction du deuxième code graphique matriciel (le premier pixel étant « éliminé »), et, pour d'autres correspondances, un pixel à ajouter au deuxième code graphique matriciel est déterminé à partir du premier et du deuxième pixel.

A cet effet, selon une première optimisation mise en oeuvre à une étape 103 facultative, la taille des modules utilisés pour la construction du deuxième code graphique matriciel peut être réduite comparativement à la taille des modules du premier code graphique matriciel. Ainsi, en décomposant chaque module du premier code graphique matriciel en une zone centrale comprenant au moins un pixel du module, et une zone périphérique comprenant les autres pixels du module, l'invention peut prévoir que, pour chaque correspondance entre un premier pixel d'une zone périphérique d'un module du premier code graphique matriciel avec un deuxième pixel de l'image, le deuxième pixel de l'image est ajouté au deuxième code graphique matriciel. Sur la base de tests effectués, il s'avère qu'une zone périphérique correspondant à 60% du module permet à la fois d'obtenir un deuxième code graphique matriciel robuste et d'avoir un bon niveau de visibilité de l'image dans le deuxième code graphique matriciel. Toutefois, lorsque le premier code graphique matriciel est de petite taille, une zone périphérique de 60% peut rendre le code fragile.

L'invention propose alors de prendre en compte la taille du module dans la décomposition du premier code graphique matriciel en une zone périphérique et une zone centrale.

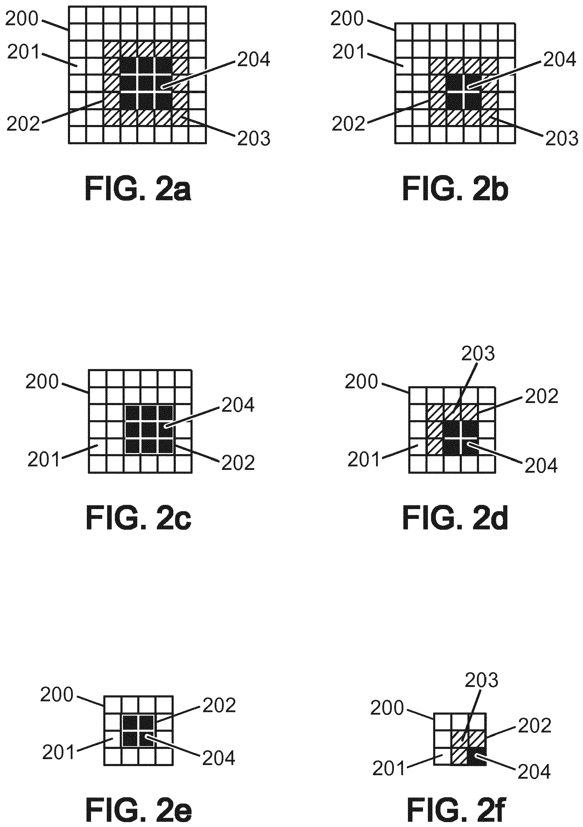

Les figures 2a à 2f illustrent des exemples de décomposition des modules du premier code graphique matriciel en fonction de la taille des modules, en nombre de pixels.

La figure 2a illustre un exemple de décomposition d'un module carré 200 d'une largeur de 8 pixels. Dans ce cas, la zone centrale est un carré 202 de largeur 5 pixels. Les pixels restants du module 200 sont situés dans une zone périphérique 201 (en blanc). Pour chaque correspondance de l'un de ces pixels de la zone périphérique avec un pixel de l'image, le pixel de l'image est ajouté au deuxième code graphique matriciel. Au sein même de la zone centrale, l'invention peut prévoir de définir une zone de transparence partielle 203 d'une largeur de 1 pixel entourant une zone de transparence totale 204. Dans la zone de transparence totale 204, la première optimisation peut prévoir d'ajouter le pixel (blanc ou noir) du premier code graphique matriciel au deuxième code graphique matriciel. Pour un pixel de la zone de transparence partielle 203, un indice de transparence non-nul peut être appliqué au pixel de l'image correspondant, et un pixel obtenu par superposition du pixel de l'image rendu partiellement transparent sur le pixel du premier code graphique peut être ajouté au deuxième code graphique matriciel. Par exemple, l'indice de transparence non nul peut être égal 70%.

La figure 2b illustre un exemple de décomposition d'un module carré 200 d'une largeur de 7 pixels. Dans ce cas, la zone centrale est un carré 202 de largeur 4 pixels. Les pixels restants du module 200 sont situés dans une zone périphérique 201 (en blanc). Pour chaque correspondance de l'un de ces pixels de la zone périphérique avec un pixel de l'image, le pixel de l'image est ajouté au deuxième code graphique matriciel. Au sein même de la zone centrale, l'invention peut prévoir de définir une zone de transparence partielle 203 d'une largeur de 1 pixel entourant une zone de transparence totale 204. Dans la zone de transparence totale 204, la première optimisation peut prévoir d'ajouter le pixel (blanc ou noir) du premier code graphique matriciel au deuxième code graphique matriciel. Pour un pixel de la zone de transparence partielle 203, un indice de transparence non-nul peut être appliqué au pixel de l'image correspondant, et un pixel obtenu par superposition du pixel de l'image rendu partiellement transparent sur le pixel du premier code graphique peut être ajouté au deuxième code graphique matriciel. Par exemple, l'indice de transparence non-nul peut être égal 40%. L'indice de transparence est réduit par rapport à l'exemple de la figure 2a afin de conserver une lisibilité satisfaisante du deuxième code graphique malgré la réduction de la taille des modules.

La figure 2c illustre un exemple de décomposition d'un module carré 200 d'une largeur de 6 pixels. Dans ce cas, la zone centrale est un carré 202 de largeur 3 pixels. Les pixels restants du module 200 sont situés dans une zone périphérique 201 (en blanc). Pour chaque correspondance de l'un de ces pixels de la zone périphérique avec un pixel de l'image, le pixel de l'image est ajouté au deuxième code graphique matriciel. Dans la zone centrale 202, qui est une unique zone de transparence totale 204, la première optimisation peut prévoir d'ajouter le pixel (blanc ou noir) du premier code graphique matriciel au deuxième code graphique matriciel. Aucune zone de transparence partielle n'est prévue afin de conserver une lisibilité satisfaisante du deuxième code graphique malgré la réduction de la taille des modules comparativement aux cas des figures 2a et 2b.

La figure 2d illustre un exemple de décomposition d'un module carré 200 d'une largeur de 5 pixels. Dans ce cas, la zone centrale est un carré 202 de largeur 3 pixels. Les pixels restants du module 200 sont situés dans une zone périphérique 201 (en blanc). Pour chaque correspondance de l'un de ces pixels de la zone périphérique avec un pixel de l'image, le pixel de l'image est ajouté au deuxième code graphique matriciel. Au sein même de la zone centrale, l'invention peut prévoir de définir une zone de transparence partielle 203 d'une largeur de 1 pixel entourant partiellement une zone de transparence totale 204. Dans la zone de transparence totale 204, la première optimisation peut prévoir d'ajouter le pixel (blanc ou noir) du premier code graphique matriciel au deuxième code graphique matriciel. Pour un pixel de la zone de transparence partielle 203, un indice de transparence non-nul peut être appliqué au pixel de l'image correspondant, et un pixel obtenu par superposition du pixel de l'image rendu partiellement transparent sur le pixel du premier code graphique peut être ajoutée au deuxième code graphique matriciel. Par exemple, l'indice de transparence non-nul peut être égal 20%.

La figure 2e illustre un exemple de décomposition d'un module carré 200 d'une largeur de 4 pixels. Dans ce cas, la zone centrale est un carré 202 de largeur 3 pixels. Les pixels restants du module 200 sont situés dans une zone périphérique 201 (en blanc). Pour chaque correspondance de l'un de ces pixels de la zone périphérique avec un pixel de l'image, le pixel de l'image est ajouté au deuxième code graphique matriciel. Dans la zone centrale 202, qui est une unique zone de transparence totale 204, la première optimisation peut prévoir d'ajouter le pixel (blanc ou noir) du premier code graphique matriciel au deuxième code graphique matriciel. Aucune zone de transparence partielle n'est prévue afin de conserver une lisibilité satisfaisante du deuxième code graphique malgré la réduction de la taille des modules comparativement au cas de la figure 2d.

La figure 2f illustre un exemple de décomposition d'un module carré 200 d'une largeur de 3 pixels. Dans ce cas, la zone centrale est un carré 202 de largeur 2 pixels. Les pixels restants du module 200 sont situés dans une zone périphérique 201 (en blanc). Pour chaque correspondance de l'un de ces pixels de la zone périphérique 201 avec un pixel de l'image, le pixel de l'image est ajouté au deuxième code graphique matriciel. Au sein même de la zone centrale 202, l'invention peut prévoir de définir une zone de transparence partielle 203 d'une largeur de 1 pixel entourant partiellement une zone de transparence totale 204. Dans la zone de transparence totale 204, la première optimisation peut prévoir d'ajouter le pixel (blanc ou noir) du premier code graphique matriciel au deuxième code graphique matriciel. Pour un pixel de la zone de transparence partielle 203, un indice de transparence non-nul peut être appliqué au pixel de l'image correspondant, et un pixel obtenu par superposition du pixel de l'image rendu partiellement transparent sur le pixel du premier code graphique peut être ajouté au deuxième code graphique matriciel. Par exemple, l'indice de transparence non-nul peut être égal 50%.

L'exemple d'un module carré d'une largeur de 2 pixels n'a pas été représenté. Toutefois, dans ce cas, le module ne comprend aucune zone périphérique et le module correspond à la zone centrale 202 de la figure 2f. Dans le cas d'un module carré comprenant un seul pixel, le module entier du premier code graphique matriciel peut être recopié dans le deuxième code graphique matriciel.

Une telle première optimisation permet ainsi de faire apparaître l'image dans des zones périphériques autour de modules réduits d'un QR code. L'image ressort ainsi sans pour autant impacter la lisibilité du deuxième code graphique matriciel. En effet, la miniaturisation des modules tire profit de l'amélioration des capacités des dispositifs de lecture de codes graphiques matriciels.

L'invention peut en outre prévoir une variante à la première optimisation décrite ci-avant. Selon cette variante, la taille, en nombre de pixels, du premier code graphique matriciel peut être choisie à l'étape 101 par un utilisateur, qui peut également déterminer les positions relatives du premier code graphique matriciel et de l'image dans le deuxième code graphique matriciel (ce qui impacte donc l'étape 102 de mise en correspondance des pixels de l'image avec les pixels du premier code graphique matriciel).

Cependant, lorsque la taille en nombre de pixels est fixée par un utilisateur, et que le premier code graphique matriciel comprend un nombre prédéterminé de modules, il est possible que la largeur (et/ou la hauteur, qui sont égales dans le cas d'un code graphique matriciel carré) du premier code graphique matriciel en nombre de pixels ne soit pas divisible par le nombre de modules dans la largeur du premier code graphique matriciel, ce qui rend impossible l'attribution d'une dimension fixe en nombre de pixels aux modules du premier code graphique matriciel.

A titre d'exemple, le premier code graphique matriciel, pour une correction d'erreur de type « H », a une largeur de 29 modules (carré de 29 modules sur 29 modules), auxquels peuvent s'ajouter deux bandes périphériques de pixels blancs de part et d'autre du module (zones de silence décrites ci-après), ce qui résulte en un premier code graphique comprenant 31*31 modules. Si l'utilisateur fixe la taille du premier code graphique à 170 pixels (en largeur) sur 170 pixels (en hauteur), alors chaque module a théoriquement une largeur de 170/31, soit 5,484 pixels. Puisqu'il n'est pas possible de scinder un pixel, la présente variante propose d'arrondir en dessous la taille des modules du premier code graphique, donc à 5 dans le cas présent.

Du fait de l'arrondi au dessous présenté ci-avant, des pixels sont « manquants » pour atteindre la taille fixée par l'utilisateur. Dans l'exemple précité, le premier code graphique matriciel comprend 31*31 modules et a une largeur de 170 pixels. En arrondissant au dessous, chaque module a une largeur de 5 pixels, et une bande de 31 modules a ainsi une longueur de 155 pixels. Il manque donc 15 pixels pour atteindre une largeur de 170 pixels. Afin de compenser ce manque, la variante propose d'ajouter une bande d'une largeur de 1 pixel à certains modules du premier code graphique (dans le cas présent à 15 modules parmi les 31).

A cet effet, on peut affecter un indice croissant aux pixels d'une ligne du premier code graphique matriciel. Les indices sont donc compris entre 1 et 170 dans l'exemple précité (largeur du premier code graphique matriciel choisie par l'utilisateur). Chaque pixel est ensuite affecté à l'un des 29 modules de la manière suivante, les modules étant indexés par un indice compris entre 0 et 28 :

$$indice\_module = arr[\frac{(indice\_pixel - (largeur\_zone\_silence * param))}{param}]$$

dans lequel indice_module est l'indice du module auquel est affecté le pixel d'indice indice_pixel ;
dans lequel largeur_zone_silence est la largeur de la zone de silence en nombre de modules (1 dans l'exemple en question) ;
dans lequel param est le rapport entre le nombre de pixels choisi par l'utilisateur et la largeur du premier code graphique matriciel en nombre de modules, incluant les zones de silence. Dans l'exemple en question, param est égal à 5,484 ;
dans lequel arr est une fonction retournant la valeur arrondie en dessous (à la valeur entière inférieure), de l'argument.

Ainsi, dans l'exemple précité, les pixels d'indices 6 à 10 sont affecté au module d'indice 0, les pixels d'indices 11 à 16 sont affectés au module d'indice 1, les pixels d'indices 17 à 21 sont affectés au module d'indice 2, etc.

Le module d'indice 1 a donc été élargi d'un pixel (6 pixels de largeur) comparativement aux modules d'indice 0 et 2 (5 pixels de largeur).

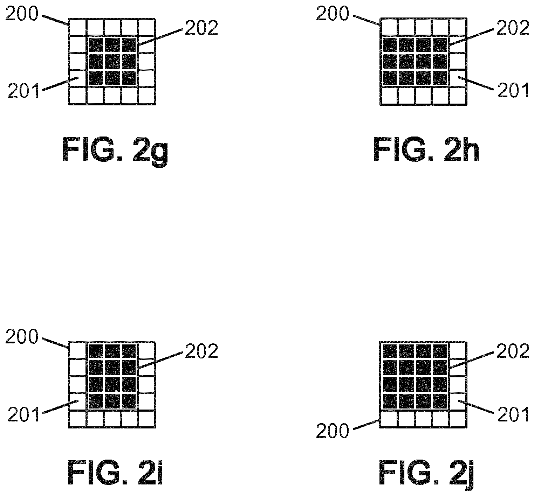

Une fois les tailles en nombre de pixels des modules déterminée (en fonction du nombre de pixels choisi par l'utilisateur et du nombre de modules prédéterminé du premier code graphique matriciel, et par application des élargissements tels que décrits ci-dessus), la variante prévoit également, en référence aux figures 2 la détermination d'une zone centrale 202 et d'une zone périphérique 201 des modules 200, conformément à la première optimisation. La taille de la zone centrale 202 est déterminée à partir de la taille du module du premier code graphique (obtenue après arrondissement au dessous comme décrit ci-avant). Par exemple, la taille de la zone centrale peut être déterminée de la façon suivante :

- si le module a une largeur de n pixels, n étant pair, la zone centrale a une largeur de n/2 pixels ;
- si le module a une largeur de n pixels, n étant impair, la zone centrale a une largeur de (n+1)/2.

Ainsi, en référence à la figure 2g, le module 200 ayant une largeur de 5 pixels, la zone centrale 202 sera un carré de 3 pixels sur 3 ((5+1)/2). Comme illustré sur la figure 2g, aucune zone de transparence partielle n'est définie dans la variante à la première optimisation.

Comme détaillé précédemment, certains modules ont été élargis afin que le premier code graphique matriciel ait la taille choisie par l'utilisateur. L'invention prévoit alors, lorsqu'un module d'indice n a été élargi, l'élargissement de la zone centrale du module d'indice n+1. En référence à la figure 2h, la zone centrale 202 du module 200 a été élargie et comprend 4 pixels en largeur et 3 en hauteur. Le module 200 peut être le module d'indice 2 de l'exemple décrit précédemment, qui suit le module d'indice 1 qui a été élargi à une largeur de 6 pixels. L'élargissement de la zone centrale 202 permet d'assurer un espacement constant de 2 pixels entre les zones centrales de deux modules d'indices consécutifs. Les zones centrales 202 paraissent ainsi centrées, malgré l'élargissement de certains modules afin d'atteindre la taille souhaitée par l'utilisateur pour le premier code graphique matriciel.

L'augmentation de la largeur (dimension de gauche à droite) d'un module a été décrite à titre illustratif dans ce qui précède. Toutefois, le premier code graphique étant matriciel, les mêmes principes sont appliqués afin d'augmenter la hauteur de certains modules pour assurer que la hauteur totale du premier code graphique matriciel est égale à la hauteur souhaitée par l'utilisateur (170 pixels dans cet exemple).

A cet effet, des indices peuvent être attribués aux pixels d'une colonne (et non plus d'une ligne) ainsi qu'aux modules d'une colonne comme décrit précédemment.

Lorsqu'un module d'indice n a été étiré d'un pixel en hauteur, l'invention prévoit également l'étirement en hauteur de la zone centrale 202 du module 200, tel qu'illustré sur la figure 2i.

Lorsqu'un module 200 est situé à droite d'un module dont la largeur a été augmentée, et au dessous d'un module dont la hauteur a été augmentée, la zone centrale 200 peut être agrandie comme représenté sur la figure 2j.

Une telle variante permet ainsi à l'utilisateur de fixer la taille et la position du premier code graphique tout en calculant dynamiquement la taille de la zone centrale de chaque module afin de garantir d'une part la lisibilité du code indépendamment de la taille du premier code graphique matriciel choisie par l'utilisateur, et d'autre part, de garder une pixellisation la plus réduite possible pour que l'image soit la plus visible possible dans le deuxième code graphique matriciel généré.

L'invention peut prévoir la mise en oeuvre d'autres optimisations permettant d'améliorer le rendu du deuxième code graphique tout en maintenant la lisibilité du code.

A une étape 104, le procédé selon l'invention propose de traiter au moins un des pixels appartenant aux zones centrales 202 obtenues selon la première optimisation. Dans un mode de réalisation préférentiel, le procédé est appliqué à l'ensemble des pixels appartenant aux zones centrales 202. Si la première optimisation n'a pas été appliquée, le procédé selon l'invention propose de traiter au moins l'un des pixels d'un module du premier code graphique.

Dans l'exemple qui suit, les étapes 104 à 108 sont appliquées à l'ensemble des correspondances entre des premiers pixels donnés d'une zone centrale de modules du premier code graphique matriciel et des deuxièmes pixels de l'image.

Une deuxième optimisation consiste à éliminer partiellement ou totalement certains modules du premier code graphique matriciel dans le deuxième code graphique matriciel, en fonction de l'image. Une telle approche consiste à exploiter les couleurs des pixels de l'image comme si chaque pixel était un pixel clair (blanc par exemple) ou un pixel sombre (noir par exemple), à l'image des pixels du premier code graphique matriciel.

A cet effet, le procédé selon l'invention peut comprendre une étape 105 de comparaison d'une différence entre un paramètre du premier pixel et un paramètre du deuxième pixel. Selon un mode de réalisation de l'invention, les paramètres de pixels sont des valeurs de niveaux de gris. Dans ce cas, de manière préalable, et dans l'exemple d'une image en couleur, la valeur en échelle de gris de chaque pixel de l'image est déterminée. Aucune restriction n'est attachée à l'échelle de gris considérée. Dans l'exemple qui suit, 256 niveaux de gris sont considérés, à titre purement illustratif. Dans ce cas, le niveau de gris d'un pixel blanc a pour valeur 255 et le niveau de gris d'un pixel noir a pour valeur 0. Le seuil prédéfini prend ainsi une valeur numérique. Dans la mesure où l'on cherche à savoir si les premier et second pixels sont tous les deux clairs ou tous les deux foncés, ou bien si l'un est clair et l'autre foncé, le seuil prédéterminé a pour valeur maximale 127 (on scinde ainsi l'échelle de gris en valeurs claires et valeurs sombres). La valeur de seuil est prise positive dans cet exemple, et la différence considérée représente donc la valeur absolue de la différence entre le paramètre du premier pixel et le paramètre du deuxième pixel.

Si la différence est inférieure ou égale au seuil prédéfini, le deuxième pixel de l'image est ajouté au deuxième code graphique matriciel à une étape 106. En effet, dans ce cas, les premier et deuxième pixels sont soit tous les deux clairs, soit tous les deux foncés, et la couleur du deuxième pixel peut alors être utilisée pour coder le deuxième code graphique matriciel tout en faisant ressortir l'image dans le deuxième code graphique matriciel.

Si la différence est supérieure au seuil prédéfini, un pixel du deuxième code graphique matriciel est déterminé en fonction du premier pixel et du deuxième pixel, à une étape 108. Cette étape est définie ultérieurement.

Le procédé retourne ensuite à l'étape 104 afin de vérifier qu'il reste des correspondances entre des premier et deuxième pixels auxquelles les étapes 105 à 108 n'ont pas encore été appliquées. Si tel est le cas, l'étape 105 est alors appliquée à un nouveau premier pixel d'une zone centrale 202 d'un module du premier code graphique matriciel et au nouveau deuxième pixel mis en correspondance à l'étape 102 avec le nouveau premier pixel.

Le seuil peut être prédéfini en fonction d'un compromis entre la netteté souhaitée de l'image dans le deuxième code graphique matriciel et la lisibilité du code. Ainsi, deux plages de valeurs peuvent être définies dans l'intervalle de valeurs entre 0 et 127 pour choisir le seuil prédéfini. Une première zone, dite « zone de sécurité », peut être comprise entre 0 et 100 et garantit une robustesse optimale lors de la lecture du code dans le deuxième code graphique matriciel. La deuxième zone, dite « zone sensible », est comprise entre 100 et 127 et permet d'éliminer un grand nombre de pixels du premier code graphique matriciel et d'ainsi faire ressortir l'image dans le deuxième code graphique matriciel, mais peut, dans certaines conditions, fragiliser la lecture du deuxième code graphique matriciel. La valeur de seuil prédéfini est proportionnelle au nombre de pixels du premier code graphique matriciel « éliminés ».

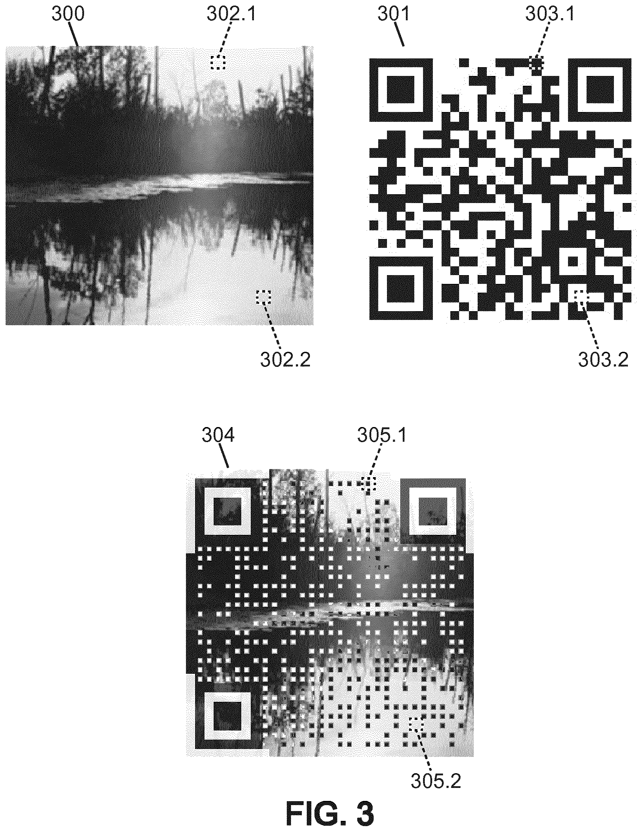

La figure 3 illustre les résultats de l'application des première et deuxième optimisations à une image 300 et à un premier code graphique matriciel 301, selon un mode de réalisation de l'invention, permettant d'obtenir un deuxième code graphique matriciel 304.

La zone 302.1 de l'image 300 comprend les pixels mis en correspondance avec les pixels d'un module 303.1 du premier code graphique matriciel 301 à l'étape 102. La zone 305.1 du deuxième code graphique matriciel 304 représente le résultat obtenu par application des première et deuxième optimisations à ces pixels.

Comme illustré, le module 303.1 du premier code graphique matriciel 301 comprend des pixels noirs. En revanche, la zone correspondante 302.1 est claire sur l'image 300 et, par conséquent, les différences calculées entre les niveaux de gris des premiers pixels du module 303.1 et les niveaux de gris des pixels correspondants de la zone 302.1 sont supérieurs au seuil prédéfini (quelle que soit la valeur du seuil, inférieur ou égal à 127). Un module de taille réduite (conformément à la première optimisation) comprenant des pixels noirs est alors ajouté dans la zone 305.1 du deuxième code graphique, entouré par les pixels de la zone périphérique de la zone 302.1.

Dans l'exemple représenté sur la figure 3, les pixels noirs de la zone centrale du module 303.1 n'ont pas été « éliminés » (car les différences respectives sont supérieures au seuil prédéfini) et ont été ajoutés tels quels dans la zone 305.1. Il s'agit d'une première manière de déterminer les pixels du deuxième code graphique matriciel en fonction des premiers pixels du premier code graphique matriciel 301 et des deuxièmes pixels de l'image 300, lorsque la différence est supérieure au seuil. D'autres exemples de détermination d'un pixel du deuxième code graphique seront présentés dans ce qui suit (en référence à l'étape 107) dans le cas où la différence entre le paramètre du premier pixel du premier code graphique matriciel et le paramètre du deuxième pixel de l'image est supérieure au seuil prédéfini.

Une autre zone claire 302.2 de l'image 300 est représentée sur la figure 3. La zone 302.2 comprend des deuxièmes pixels mis en correspondance avec des premiers pixels blancs d'un module 303.2 du premier code graphique matriciel 303.1. Les différences entre les paramètres des premiers pixels et les paramètres des deuxièmes pixels sont faibles, et inférieures au seuil prédéfini, dans le cas où ce dernier n'est pas fixé à une valeur trop petite (par exemple si le seuil est fixé entre 50 et 127). Conformément à l'étape 106 décrite précédemment, les deuxièmes pixels de la zone 302.2 de l'image sont donc ajoutés dans la zone 305.2 du deuxième code graphique matriciel 304, les pixels blancs du module 303.2 du premier code graphique matriciel 301 étant ainsi « éliminés ».

Ainsi, selon la deuxième optimisation, une partie des pixels du premier code graphique matriciel est éliminée ce qui permet de faire apparaître de manière nette l'image dans le deuxième code graphique matriciel, sans toutefois impacter la lisibilité du code puisque les deuxièmes pixels de l'image sont dans la même gamme de niveau de gris que les premiers pixels auxquels ils correspondent.

Toutefois, comme illustré sur la figure 305.2, dans le cas où la différence est supérieure au seuil prédéfini, l'ajout d'un pixel noir ou blanc issu du premier code graphique matriciel (comme c'est le cas pour le module 303.1), dans le deuxième code graphique matriciel (comme illustré dans la zone 305.1) dénature l'image.

Une troisième optimisation peut alors être mise en oeuvre à une étape 107, préalable à l'étape 108 précédemment décrite.

Dans le cas où la différence entre le paramètre d'un premier pixel et le paramètre du deuxième pixel correspondant est supérieure au seuil prédéfini, la troisième optimisation de l'étape 107 peut consister à modifier la luminance du deuxième pixel de manière à ce que la différence entre le paramètre du premier pixel et le paramètre du deuxième pixel soit inférieure au seuil prédéfini et à ajouter le deuxième pixel modifié de l'image au deuxième code graphique matriciel. Le modèle chromatique TSL (pour Teinte, Saturation, Luminance, ou HSL en anglais) peut être utilisé pour modéliser la couleur du deuxième pixel de l'image. Les modifications apportées à la luminance des deuxièmes pixels de l'image peuvent être apportées de la manière suivante.

* Si la couleur du premier pixel est blanche (valeur=255):

$$LuminancePixelImage = (255-\Delta Px)*(1-ValeurMiniPlageLuminance))/(255-Ts) + ValeurMiniPlageLuminance$$

dans lequel LuminancePixelImage, aussi notée L dans ce qui suit, est la valeur cible de luminance du deuxième pixel, $\Delta Px$ est la différence entre les niveaux de gris des premier et deuxième pixels, ValeurMiniPlageLuminance est une valeur préfixée minimale pour la plage de luminance dans laquelle la valeur de luminance pour le deuxième pixel modifié est sélectionnée, et Ts représente le seuil prédéfini. ValeurMiniPlageLuminance peut être fixée à 80% (la luminance du deuxième pixel de l'image étant nécessairement augmentée) et le seuil Ts peut être fixé à 127. La formule suivante est ainsi obtenue pour la détermination de la valeur cible de luminance du deuxième pixel :

$$L = (255-\Delta Px)*(1-0,8)/(255-127) + 0,8 ;$$

\* Si la couleur du premier pixel est noire (valeur=0), la même formule est appliquée mais avec une ValeurMiniPlageLuminance de valeur différente, de manière à assurer que la luminance du deuxième pixel de l'image est diminuée. Par exemple, ValeurMiniPlageLuminance peut être pris égal à 20% et la formule suivante est ainsi obtenue pour la détermination de la valeur cible de luminance du deuxième pixel :

$$L = (255-\Delta Px)*(1-0,2)/(255-127) + 0,2$$

Ainsi, deux plages de tonalité de pixels clairs et foncés sont définies afin de pallier à la sensibilité de la lecture de pixels ayant une tonalité moyenne dans les diverses conditions environnementales, les diverses caractéristiques de la caméra du dispositif de lecture du code, etc. Ainsi, une plage de luminance comprise entre 80% et 100% est définie lorsque le deuxième pixel de l'image doit tendre vers une couleur claire (lorsque le premier pixel du premier code graphique matriciel est blanc) et une autre plage de luminance comprise entre 0% et 20% dans le cas contraire.

Une fois la luminance du deuxième pixel modifiée, le deuxième pixel modifié est ajouté au deuxième code graphique matriciel à l'étape 108. Une telle réalisation permet de réduire la dénaturation de l'image dans le deuxième code graphique matriciel comparativement à la solution décrite précédemment consistant à recopier le pixel noir ou blanc du premier code graphique matriciel dans le deuxième code graphique matriciel.

Toutefois, la troisième optimisation précitée, basée sur le modèle chromatique HSL peut, dans certains cas, dénaturer légèrement la couleur du pixel perçue. En effet, en modifiant la luminance du deuxième pixel de l'image, dans le cas où le deuxième pixel est d'une couleur très sombre (un brun très foncé), mais distincte du noir, le deuxième pixel tend vers le jaune (tonalité claire pour être dans la même plage de niveaux de gris que le premier pixel du premier code graphique matriciel) lorsque la luminance est augmentée dans la plage de luminances 80% à 100%.

Afin de pallier à cette dénaturation, la présente invention présente une variante à la troisième optimisation de l'étape 107. Cette variante repose sur l'idée de superposer l'image sur la premier code graphique matriciel, en rendant plus ou moins opaques les pixels de l'image, afin d'obtenir le deuxième code graphique matriciel. Comme pour les réalisations précédemment décrites, la variante est appliquée aux correspondances entre premier et deuxième pixels pour lesquelles la différence entre les paramètres est supérieure au seuil prédéfini.

Une telle variante permet de ne pas dénaturer le couleur perçue des deuxièmes pixels de l'image, de garder une couleur la plus proche de sa valeur chromatique d'origine et, simultanément, d'assurer que le pixel ajouté au deuxième code graphique matriciel appartient à la même plage (foncée ou claire) en échelle de gris que le premier pixel du premier code graphique matriciel, assurant ainsi que le deuxième code graphique matriciel a le même niveau de lisibilité que le premier code graphique matriciel.

Ainsi, l'étape 107 peut comprendre en variante la modification du deuxième pixel en lui attribuant un indice d'opacité différent de 1 de manière à ce que la différence entre un paramètre d'une superposition du deuxième pixel modifié sur le premier pixel et le paramètre du deuxième pixel soit inférieure au seuil prédéfini. L'étape 108 comprend alors la superposition du deuxième pixel modifié sur le premier pixel de manière à obtenir le pixel ajouté au deuxième code graphique matriciel.

L'opacité du deuxième pixel peut ainsi être modifiée en fonction de la couleur (claire ou foncée, noire ou blanche) du premier pixel du premier code graphique matriciel, et de la valeur $\Delta Px$.

\* Si la couleur du premier pixel du premier code graphique matriciel est le blanc, alors l'indice d'opacité du deuxième pixel, noté OpacitéPixelImage peut être pris entre une valeur d'opacité maximale OpacitéMax, par exemple 30%, et une valeur d'opacité minimale OpacitéMin, par exemple 10%. La détermination de l'indice d'opacité dans cet intervalle dépend de la différence $\Delta Px$ (qui est nécessairement compris entre 128 et 255, dans le cas illustratif où le seuil est prédéfini a une valeur de 127).

On note la variable StepIncrement égale à :

$$StepIncrement = (OpacitéMax - OpacitéMin)/(255-128)$$

L'indice d'opacité du deuxième pixel peut alors être fixé de la manière suivante :

$$OpacitéPixelImage = OpacitéMax - (StepIncrement*(\Delta Px-128))$$

Ainsi, lorsque la différence $\Delta Px$ est égale à 255, la valeur OpacitéMin est attribuée à l'indice d'opacité du deuxième pixel, et le deuxième pixel de l'image, initialement très sombre puisque la couleur du premier pixel est le blanc, est rendu très transparent.

\* Si la couleur du premier pixel du premier code graphique est le noir, alors les mêmes formules peuvent être appliquées. Afin d'optimiser la modification de l'indice d'opacité, les valeurs d'opacité maximale et d'opacité minimale peuvent être modifiées comparativement au cas où le premier pixel est blanc. Ainsi, OpacitéMax peut être prise égale à 50% et OpacitéMin peut être prise égale à 20%.

Une quatrième optimisation consiste à appliquer les première, deuxième et troisième optimisations à des premiers pixels du premier code graphique matriciel appartenant à certains motifs prédéfinis. De tels motifs prédéfinis permettent de définir la structure d'un QR code et sont définis dans la version QR code 2005 de la norme ISO/IEC 18004.

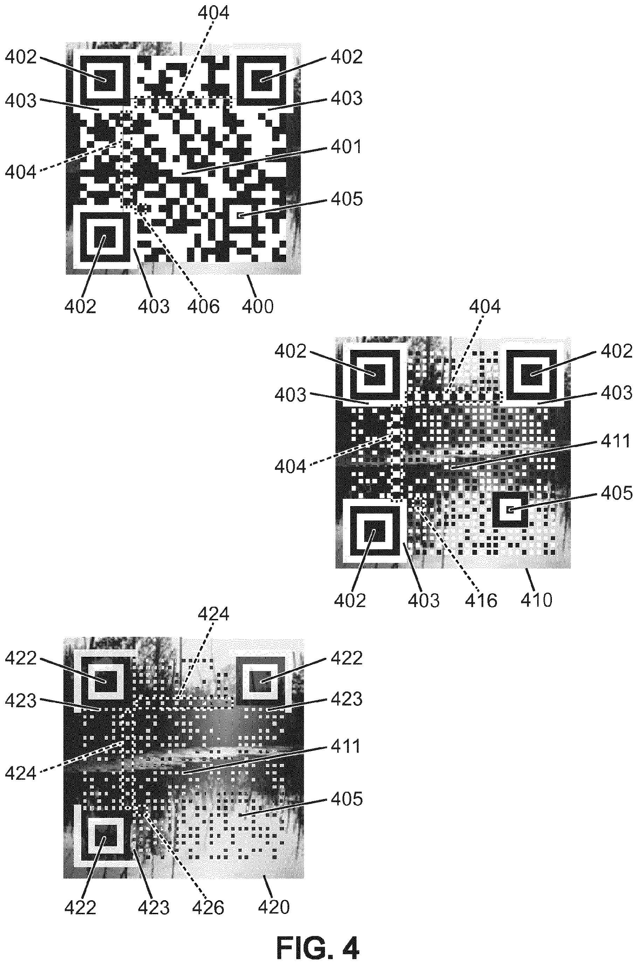

La figure 4 illustre l'application des première, deuxième et troisième optimisations à une image et à un premier code graphique matriciel comprenant des motifs prédéfinis, selon un mode de réalisation de l'invention.

La référence 400 représente le premier code graphique matriciel superposé sur l'image. Une telle superposition est uniquement utilisée pour illustrer la mise en correspondance entre les pixels de l'image et les pixels du premier code graphique matriciel. Le premier code graphique matriciel comprend des modules de code 401, chaque module comprenant un ensemble de pixels noirs ou blancs. L'application des optimisations à ces pixels a été décrite précédemment. Le premier code graphique matriciel comprend en outre :

- trois motifs 402 de détection de la position du premier code graphique matriciel ;
- trois séparateurs 403 (bandes de modules comprenant des pixels blancs) permettant de séparer respectivement les motifs 402 des modules de code 401 ;
- deux motifs gradués 404 (bandes alternant des modules noirs et blancs) qui permettent de densifier le premier code graphique matriciel et de fournir des positions de référence pour le calcul des coordonnées de chaque module ;

- un motif d'alignement 405 qui sert à corriger la distorsion lorsque le code est plié ou courbé. Un seul motif d'alignement est représenté sur la figure 3. Toutefois le nombre de motifs d'alignement peut être supérieur à 1 et dépend de la quantité d'information encodée ;
- un module sombre 406 qui est un module situé à une position prédéfinie et qui est toujours de couleur foncée (noir par exemple). Comme indiqué sur la figure 3, la position prédéfinie peut être au dessus à droite du séparateur 403 du motif 402 dans le coin en bas à gauche. Plus précisément, le module sombre 406 peut être situé aux coordonnées ($[(4*V)+9]$ ;8) où V est la version du QR code. La version utilisée à titre illustratif pour les figures 2 à 5 est la version 3.

La référence 410 est donnée uniquement à titre illustratif, la première optimisation étant appliquée aux modules du code 401 et au module sombre 406 uniquement, afin d'obtenir des modules réduits respectifs 411 et 416, et ce, afin de faire ressortir les motifs 402 à 405 décrits précédemment.

La référence 420 représente le deuxième code graphique matriciel obtenu par application des première, deuxième et troisième optimisations aux pixels des modules de code 401 d'une part, mais également aux pixels des séparateurs 403, des motifs gradués 404, du motif d'alignement 405 et du module sombre 406 (quatrième optimisation). Ainsi, les pixels des modules de code réduits 411 ont été sélectionnés selon la deuxième optimisation et traités selon la troisième optimisation, et la même sélection et le même traitement ont été appliqués aux pixels des séparateurs 403, des motifs gradués 404, du motif d'alignement 405 et du module sombre 406, dont les modules ont été précédemment réduits selon la première optimisation. Les étapes 103 à 108 du procédé sont donc optionnellement appliquées aux pixels des séparateurs 403, des motifs gradués 404, du motif d'alignement 405 et du module sombre 406, et aux pixels correspondants de l'image. Quant aux pixels des motifs 402, seule la troisième optimisation (étapes 107 et 108 sans l'étape de test 105), ou sa variante, a été appliquée (pas de réduction des modules ni de sélection des premiers pixels du premier code graphique matriciel).

Le deuxième code graphique matriciel comprend ainsi :

- trois motifs 422 de détection issus de la troisième optimisation appliquée aux motifs 402 ;
- trois séparateurs 423 issus des première, deuxième et troisième optimisations appliquées aux séparateurs 403;
- deux motifs gradués 424 issus des première, deuxième et troisième optimisations appliquées aux deux motifs gradués 404 ;
- un motif d'alignement 425 issu des première, deuxième et troisième optimisations appliquées au motif d'alignement 405 ;
- un module sombre 426 issu des deuxième et troisième optimisations appliquées au module sombre réduit 416.

Ainsi, un deuxième code graphique matriciel est obtenu à l'issue des étapes 100 à 108. Une cinquième optimisation peut être optionnellement apportée à une étape 109.

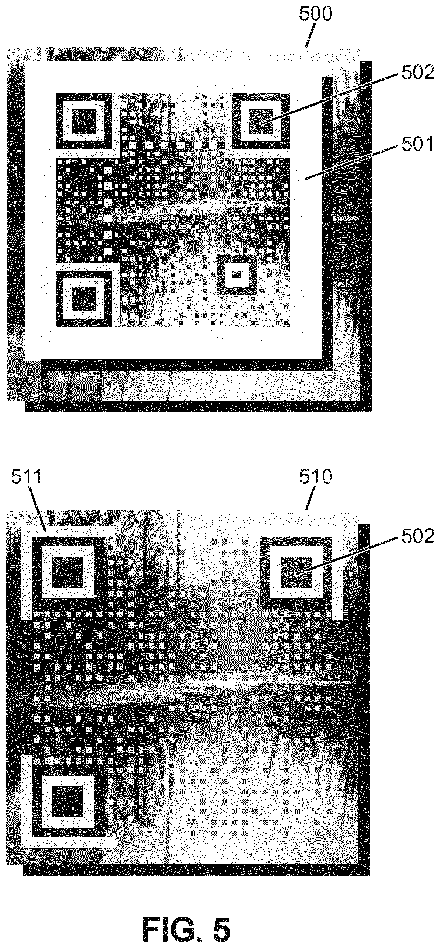

En référence à la figure 5, le premier code graphique matriciel peut comprendre une bande de pixels blancs, appelée zone de silence, située autour du code qui ne contient aucun élément graphique, ce qui perturberait la détection et donc la lecture du code. La référence 500 représente le premier code graphique matriciel superposé sur l'image, et ce uniquement à titre illustratif afin de représenter la mise en correspondance des premiers pixels du premier code graphique matriciel et des deuxièmes pixels de l'image. A l'instar de la référence 410 de la figure 4, les modules du code ont été réduits afin de faire ressortir les motifs du premier code graphique matriciel. Le premier code graphique matriciel comprend notamment trois motifs 502 de détection correspondant aux motifs 402 de la figure 4. En outre, le premier code graphique comprend une bande de pixels 501 dont la largeur correspond à la largeur de plusieurs modules (4 modules).

Une première réalisation de la cinquième optimisation (non représentée) consiste à intégrer la bande de pixels 501 dans le deuxième code graphique matriciel.

Selon une deuxième réalisation de la cinquième optimisation (non représentée), la bande de pixels 501 est réduite à une largeur d'un module et intégrée dans le deuxième code graphique matriciel. Selon une troisième réalisation préférentielle de la cinquième optimisation, référencée 510, une bande de pixels blanc 511 d'une largeur d'un module entoure partiellement la région codée du deuxième code graphique matriciel. En particulier, seuls les trois motifs 502 sont entourés par la bande de pixels blancs 511.

Ainsi, dans les deuxième et troisième réalisations de la cinquième optimisation, la taille de la zone de silence est réduite comparativement aux prescriptions de la norme précitée qui prévoit une largeur de 4 modules sur chacune des quatre faces du QR code. La présente invention tire partie de l'évolution des dispositifs de lecture, et notamment des Smartphones, capables de détecter la zone de silence jusqu'à une largeur minimale d'un module. En outre, la zone de silence est uniquement lue autour des motifs 502 et la cinquième optimisation permet ainsi de dénaturer le moins possible l'image dans le deuxième code graphique matriciel, tout en conservant le même niveau de lisibilité que celui du premier code graphique matriciel. De telles réalisations permettent en outre d'incruster un premier code graphique matriciel de petite taille dans une image.

En outre, selon la troisième réalisation, l'image est dénaturée au minimum dans la mesure où la zone de silence est réduite autant que possible.

Les codes graphiques matriciels utilisés dans les figures 2 à 5 sont des QR code en version 3 avec une correction d'erreur d'un niveau « H ». Il est à noter que quatre niveaux d'erreur différents peuvent être prévus : L, M, Q et H (H étant le niveau de correction d'erreur le plus élevé). La présente invention n'est aucunement restreinte à l'exemple particulier illustré sur les figures et s'applique indifféremment à n'importe quelle version de QR code ainsi qu'à n'importe quel niveau de correction d'erreur.

Suite à l'étape optionnelle 109, le deuxième code graphique matriciel est obtenu et peut être soumis à d'éventuels post-traitements, à une étape 110.

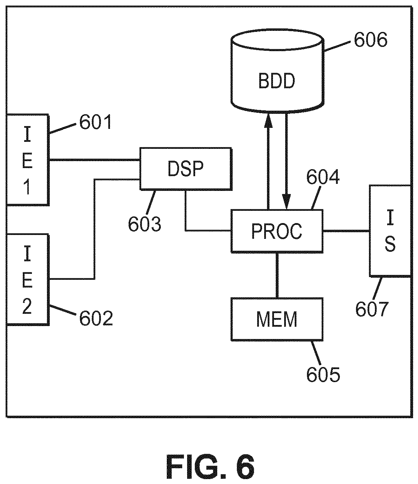

La figure 6 présente un dispositif de génération d'un code graphique matriciel personnalisé selon un mode de réalisation de l'invention.

Le dispositif comprend une mémoire vive 605 et un processeur 604 pour stocker des instructions permettant la mise en oeuvre du procédé de génération d'un code graphique matriciel personnalisé décrit ci-avant. Le dispositif comporte aussi une mémoire de masse 606 pour le stockage de données destinées à être conservées après l'application du procédé. Le dispositif comporte en outre une première interface d'entrée 601, pour la réception d'une image comprenant un ensemble de pixels une deuxième interface d'entrée 602 pour la réception d'un premier code graphique matriciel, et une interface de sortie 607 apte à transmettre le deuxième code graphique matriciel vers un autre dispositif pour l'application éventuelles de post-traitements. A noter qu'une unique interface d'entrée peut être prévue pour recevoir à la fois l'image et le premier code graphique matriciel. Le dispositif peut en outre comporter un processeur de signal numérique (DSP) 603. Ce DSP 702 peut être apte à convertir les images et les premiers codes graphiques matriciels dans un format exploitable par le processeur 604.

## Revendications

**1.** Procédé de génération d'un code graphique matriciel personnalisé, ledit procédé comprenant les étapes suivantes :

- réception (100) d'une image comprenant un ensemble de pixels ;
- réception (101) d'un premier code graphique matriciel, ledit premier code graphique matriciel comprenant un ensemble de modules, chaque module comprenant un ensemble de pixels d'une couleur donnée, les couleurs des modules définissant un code ;
- mise en correspondance (102) de chaque pixel du premier code graphique matriciel avec un pixel de l'image ;
**caractérisé en ce que** ledit procédé comprend en outre une étape de sélection de pixels du premier code graphique matriciel pour la génération d'un deuxième code graphique matriciel personnalisé, l'étape de sélection comprenant les étapes suivantes, pour au moins une correspondance entre un premier pixel donné du premier code graphique matriciel et un deuxième pixel de l'image :

- comparaison (105) d'une différence entre un paramètre du premier pixel et un paramètre du deuxième pixel avec un seuil prédéfini ;
- si la différence est inférieure ou égale au seuil prédéfini, ajout (106) du deuxième pixel de l'image au deuxième code graphique matriciel ;
- si la différence est supérieure au seuil prédéfini, déterminer (107 ; 108) un pixel du deuxième code graphique matriciel en fonction du premier pixel et du deuxième pixel.

2. Procédé selon la revendication 1, dans lequel les paramètres de pixels sont des niveaux de gris des premier et deuxième pixels et dans lequel chaque pixel du premier code graphique matriciel est noir ou blanc.

3. Procédé selon l'une des revendications 1 et 2, comprenant en outre une étape de décomposition (103) de chaque module du premier code graphique matriciel en une zone centrale comprenant au moins un pixel du module et une zone périphérique comprenant les autres pixels du module, dans lequel l'étape de sélection est appliquée aux pixels des zones centrales de l'ensemble des modules, et

dans lequel, pour chaque correspondance entre un pixel d'une zone périphérique d'un module du premier code graphique matriciel avec un pixel de l'image, le pixel de l'image est ajouté au deuxième code graphique matriciel.

4. Procédé selon l'une des revendications 1 à 3, dans lequel, si la différence est supérieure au seuil prédéfini, le pixel ajouté au deuxième code graphique est déterminé par les étapes suivantes :

- modification (107) de la luminance du deuxième pixel de manière à ce que la différence entre le paramètre du premier pixel et le paramètre du deuxième pixel soit inférieure audit seuil ;
- ajout (108) du deuxième pixel modifié de l'image au deuxième code graphique matriciel.

5. Procédé selon l'une des revendications 1 à 3, dans lequel, si la différence est supérieure au seuil prédéfini, le pixel ajouté au deuxième code graphique est obtenu par les étapes suivantes :

- modification (107) du deuxième pixel en lui attribuant un indice d'opacité différent de 1 de manière à ce que la différence entre un paramètre d'une superposition du deuxième pixel sur le premier pixel et le paramètre du deuxième pixel soit inférieure audit seuil;
- superposition (108) du deuxième pixel modifié sur le premier pixel de manière à obtenir le pixel ajouté au deuxième code graphique matriciel.

6. Procédé selon la revendication 5, dans lequel l'indice d'opacité attribué est inversement proportionnel à la différence entre le paramètre du premier pixel et le paramètre du deuxième pixel.

7. Procédé selon l'une des revendications précédentes, dans lequel les dimensions en nombre de pixels du premier code graphique matriciel sont inférieures aux dimensions de l'image, seule une partie de l'image étant ainsi en correspondance avec le premier code graphique matriciel,

dans lequel une partie complémentaire de l'image n'étant pas mise en correspondance avec des pixels du premier code graphique matriciel est ajoutée au deuxième code graphique.

8. Procédé selon la revendication 7, une bande de pixels blancs d'une largeur d'au moins un module est ajoutée dans le deuxième code graphique, ladite bande entourant au moins partiellement une zone correspondant aux pixels mis en correspondance entre le premier code graphique matriciel et l'image.

9. Procédé selon la revendication 8, dans lequel la bande de pixels blancs a une largeur d'un module.

10. Procédé selon l'une des revendications précédentes, dans lequel le premier code graphique matriciel comprend l'un des éléments suivants ou toute combinaison parmi les éléments suivants :

- des motifs gradués pour densifier le premier code graphique matriciel ;
- des séparateurs séparant les motifs gradués de la partie restante du premier code graphique matriciel ;
- des motifs d'alignement permettant de corriger la distorsion en cas de pliage ou courbage du premier code graphique matriciel ;

13

- des motifs sombres de couleur noire situés à des endroits prédéfinis du premier code graphique matriciel ;

dans lequel l'étape de sélection est appliquée aux pixels dudit élément ou desdits éléments du premier code graphique matriciel.

11. Procédé selon l'une des revendications précédentes, dans lequel les couleurs du premier code graphique matriciel codent :

   - un lien URL vers un site internet ;
   - des coordonnées de réseau Wi-fi ; ou
   - une position géographique ;
   - une carte de visite ;
   - une adresse mail et son texte ;
   - un numéro de téléphone ;
   - un message court ;
   - du texte ;
   - une planification d'un évènement dans un agenda.

12. Programme d'ordinateur comportant des instructions pour la mise en oeuvre du procédé selon l'une des revendications 1 à 11, lorsque ce programme est exécuté par un processeur.

13. Dispositif de génération d'un code graphique matriciel personnalisé, ledit dispositif comprenant les étapes suivantes :

   - une première interface (601) pour la réception d'une image comprenant un ensemble de pixels ;
   - une deuxième interface (602) pour la réception d'un premier code graphique matriciel, ledit premier code graphique matriciel comprenant un ensemble de modules, chaque module comprenant un ensemble de pixels d'une couleur donnée, le code étant défini par la couleur donnée ;
   **caractérisé en ce que** ledit dispositif comprend en outre un processeur (604) apte à mettre en oeuvre une étape de mise en correspondance de chaque pixel du premier code graphique matriciel avec un pixel de l'image et une étape de sélection de pixels du matriciel graphique pour la génération d'un deuxième code graphique matriciel personnalisé, l'étape de sélection comprenant les étapes suivantes, pour au moins une correspondance entre un premier pixel donné du code graphique matriciel et un deuxième pixel de l'image :

      - comparaison d'une différence entre un paramètre du premier pixel et un paramètre du deuxième pixel avec un seuil prédéfini ;
      - si la différence est inférieure ou égale au seuil prédéfini, ajout du deuxième pixel de l'image au deuxième code graphique matriciel ;
      - si la différence est supérieure au seuil prédéfini, déterminer un pixel du deuxième code graphique matriciel en fonction du premier pixel et du deuxième pixel.

**Patentansprüche**

1. Verfahren zur Erzeugung eines personalisierten Matrix-Grafikcodes, wobei das Verfahren die folgenden Schritte umfasst:

   - Empfangen (100) eines Bildes, das eine Gruppe von Pixeln umfasst;
   - Empfangen (101) eines ersten Matrix-Grafikcodes, wobei der erste Matrix-Grafikcode eine Gruppe von Modulen umfasst, wobei jedes Modul eine Gruppe von Pixeln einer gegebenen Farbe umfasst, wobei die Farben der Module einen Code definieren;
   - In-Übereinstimmung-Bringen (102) jedes Pixels des ersten Matrix-Grafikcodes mit einem Pixel des Bildes;

   **dadurch gekennzeichnet, dass** das Verfahren ferner einen Schritt des Auswählens von Pixeln des ersten Matrix-Grafikcodes zum Erzeugen eines personalisierten zweiten Matrix-Grafikcodes umfasst, wobei der Auswahlschritt für zumindest eine Übereinstimmung zwischen einem ersten gegebenen Pixel des ersten Matrix-Grafikcodes und einem zweiten Pixel des Bildes die folgenden Schritte umfasst:

      - Vergleichen (105) einer Differenz zwischen einem Parameter des ersten Pixels und einem Parameter des zweiten Pixels mit einem vordefinierten Grenzwert;
- wenn die Differenz kleiner als oder so groß wie der vordefinierte Grenzwert ist, Hinzufügen (106) des zweiten Pixels des Bildes zum zweiten Matrix-Grafikcode ;
- wenn die Differenz größer als der vordefinierte Grenzwert ist, Bestimmen (107; 108) eines Pixels des zweiten Matrix-Grafikcodes in Abhängigkeit vom ersten Pixel und vom zweiten Pixel.

2. Verfahren nach Anspruch 1, wobei die Pixelparameter Graustufen des ersten und zweiten Pixels sind und wobei jedes Pixel des ersten Matrix-Grafikcodes schwarz oder weiß ist.

3. Verfahren nach einem der Ansprüche 1 und 2, ferner umfassend einen Schritt des Zerlegens (103) jedes Moduls des ersten Matrix-Grafikcodes in einen zentralen Bereich, der zumindest ein Pixel des Moduls umfasst, und einen Randbereich, der die anderen Pixel des Moduls umfasst, wobei der Auswahlschritt auf die Pixel der zentralen Bereiche der Modulgruppe angewandt wird, und
wobei, für jede Übereinstimmung zwischen einem Pixel eines Randbereichs eines Moduls des ersten Matrix-Grafikcodes mit einem Pixel des Bildes, das Pixel des Bildes dem zweiten Matrix-Grafikcode hinzugefügt wird.

4. Verfahren nach einem der Ansprüche 1 bis 3, wobei, wenn die Differenz größer als der vordefinierte Grenzwert ist, das dem zweiten Grafikcode hinzugefügte Pixel durch die folgenden Schritte bestimmt wird:

- Verändern (107) der Leuchtdichte des zweiten Pixels, sodass die Differenz zwischen dem Parameter des ersten Pixels und dem Parameter des zweite Pixel kleiner als der Grenzwert ist;
- Hinzufügen (108) des veränderten zweiten Pixels des Bildes zum zweiten Matrix-Grafikcode.

5. Verfahren nach einem der Ansprüche 1 bis 3, wobei, wenn die Differenz größer als der vordefinierte Grenzwert ist, das dem zweiten Grafikcode hinzugefügte Pixel durch die folgenden Schritte erhalten wird:

- Verändern (107) des zweiten Pixels, indem diesem ein Opazitätsindex ungleich 1 zugewiesen wird, sodass die Differenz zwischen einem Parameter einer Überlagerung des ersten Pixels durch das zweite Pixel und dem Parameter des zweiten Pixels kleiner als der Grenzwert ist;
- Überlagern (108) des ersten Pixels durch das veränderte zweite Pixel, um das dem zweiten Matrix-Grafikcode hinzugefügte Pixel zu erhalten.

6. Verfahren nach Anspruch 5, wobei der zugewiesene Opazitätsindex umgekehrt proportional zur Differenz zwischen dem Parameter des ersten Pixels und dem Parameter des zweiten Pixels ist.

7. Verfahren nach einem der vorangehenden Ansprüche, wobei die Dimensionen der Pixelanzahl des ersten Matrix-Grafikcodes kleiner als die Dimensionen des Bildes sind, wobei somit nur ein Teil des Bildes mit dem ersten Matrix-Grafikcode übereinstimmt, wobei ein komplementärer Teil des Bildes, der nicht mit den Pixeln des ersten Matrix-Grafikcodes in Übereinstimmung gebracht wird, dem zweiten Grafikcode hinzugefügt wird.

8. Verfahren nach Anspruch 7, wobei ein Streifen weißer Pixel von einer Breite von zumindest einem Modul dem zweiten Grafikcode hinzugefügt wird, wobei der Streifen einen Bereich, der den in Übereinstimmung zwischen dem ersten Matrix-Grafikcode und dem Bild gebrachten Pixeln entspricht, zumindest teilweise umgibt.

9. Verfahren nach Anspruch 8, wobei der Streifen weißer Pixel eine Breite eines Moduls aufweist.

10. Verfahren nach einem der vorangehenden Ansprüche, wobei der erste Matrix-Grafikcode eines der folgenden Elemente oder eine jegliche Kombination der folgenden Elemente umfasst:

- graduierte Motive zum Verdichten des Matrix-Grafikcodes;
- Separatoren zum Separieren der graduierten Motive vom verbleibenden Teil des ersten Matrix-Grafikcodes;
- Alignmentmotive, die es erlauben, im Falle einer Faltung oder Krümmung des ersten Matrix-Grafikcodes die Verzerrung zu korrigieren;
- dunkle Motive von schwarzer Farbe, die sich an vordefinierten Stellen des ersten Matrix-Grafikcodes befinden;

wobei der Auswahlschritt auf die Pixel des Elements bzw. der Elemente des ersten Matrix-Grafikcodes angewandt wird.

**11.** Verfahren nach einem der vorangehenden Ansprüche, wobei die Farben des ersten Matrix-Grafikcodes Folgendes codieren:

- einen URL-Link auf eine Internetseite;
- Wi-Fi-Netzkoordinaten; oder
- eine geographische Position;
- eine Visitenkarte;
- eine Adresse und einen Text einer E-Mail;
- eine Telefonnummer;
- eine Kurznachricht;
- Text;
- eine Planung eines Ereignisses in einem Kalender.

**12.** Computerprogramm, umfassend Anweisungen zum Durchführen des Verfahrens nach einem der Ansprüche 1 bis 11, wenn dieses Programm durch einen Prozessor ausgeführt wird.

**13.** Vorrichtung zur Erzeugung eines personalisierten Matrix-Grafikcodes, wobei die Vorrichtung die folgenden Schritte umfasst:

- eine erste Schnittstelle (601) zum Empfangen eines Bildes, das eine Gruppe von Pixeln umfasst;
- eine zweite Schnittstelle (602) zum Empfangen eines ersten Matrix-Grafikcodes, wobei der erste Matrix-Grafikcode eine Gruppe von Modulen umfasst, wobei jedes Modul eine Gruppe von Pixeln einer gegebenen Farbe umfasst, wobei der Code durch die gegebene Farbe definiert ist;

**dadurch gekennzeichnet, dass** die Vorrichtung ferner einen Prozessor (604) umfasst, der geeignet ist, einen Schritt des In-Übereinstimmung-Bringens jedes Pixels des ersten Matrix-Grafikcodes mit einem Pixel des Bildes und einen Schritt des Auswählens von Pixeln der grafischen Matrix zum Erzeugen eines personalisierten zweiten Matrix-Grafikcodes durchzuführen, wobei der Auswahlschritt für zumindest eine Übereinstimmung zwischen einem gegebenen ersten Pixel des Matrix-Grafikcodes und einem zweite Pixel des Bildes die folgenden Schritte umfasst:

- Vergleichen einer Differenz zwischen einem Parameter des ersten Pixels und einem Parameter des zweiten Pixels mit einem vordefinierten Grenzwert;
- wenn die Differenz kleiner als oder so groß wie der vordefinierte Grenzwert ist, Hinzufügen des zweiten Pixels des Bildes zum zweiten Matrix-Grafikcode;
- wenn die Differenz größer als der vordefinierte Grenzwert ist, Bestimmen eines Pixels des zweiten Matrix-Grafikcodes in Abhängigkeit vom ersten Pixel und vom zweiten Pixel.

**Claims**

**1.** Method for generating a customised matrix graphic code, said method comprising the following steps:

- receiving (100) an image comprising a set of pixels;
- receiving (101) a first matrix graphic code, said first matrix graphic code comprising a set of modules, each module comprising a set of pixels of a given colour, the colours of the modules defining a code;
- associating (102) each pixel of the first matrix graphic code with a pixel of the image;

**characterised in that** said method further comprises
a step of selecting pixels of the first matrix graphic code for the generation of a second customised matrix graphic code, the selection step comprising the following steps, for at least one association between a first given pixel of the first matrix graphic code and a second pixel of the image:

- comparing (105) a difference between a parameter of the first pixel and a parameter of the second pixel to a predefined threshold;
- if the difference is less than or equal to the predefined threshold, adding (106) the second pixel of the image to the second matrix graphic code;
- if the difference is greater than the predefined threshold, determining (107; 108) a pixel of the second matrix graphic code according to the first pixel and the second pixel.

2. Method according to claim 1, wherein the parameters of pixels are levels of grey of the first and second pixels and wherein each pixel of the first matrix graphic code is black or white.

3. Method according to one of claims 1 and 2, further comprising a step of decomposing (103) each module of the first matrix graphic code into a central zone comprising at least one pixel of the module and a peripheral zone comprising the other pixels of the module, wherein the selection step is applied to the pixels of the central zones of all the modules, and
   wherein, for each association between a pixel of a peripheral zone of a module of the first matrix graphic code and a pixel of the image, the pixel of the image is added to the second matrix graphic code.

4. Method according to one of claims 1 to 3, wherein, if the difference is greater than the predefined threshold, the pixel added to the second graphic code is determined by the following steps:

   - modifying (107) the luminance of the second pixel in such a way that the difference between the parameter of the first pixel and the parameter of the second pixel is less than said threshold;
   - adding (108) the modified second pixel of the image to the second matrix graphic code.

5. Method according to one of claims 1 to 3, wherein, if the difference is greater than the predefined threshold, the pixel added to the second graphic code is obtained by the following steps:

   - modifying (107) the second pixel by attributing an opacity index different than 1 to said pixel in such a way that the difference between a parameter of a superposition of the second pixel onto the first pixel and the parameter of the second pixel is less than said threshold;
   - superimposing (108) the modified second pixel onto the first pixel in such a way as to obtain the pixel added to the second matrix graphic code.

6. Method according to claim 5, wherein the opacity index attributed is inversely proportional to the difference between the parameter of the first pixel and the parameter of the second pixel.

7. Method according to one of the previous claims, wherein the dimensions of the first matrix graphic code in terms of number of pixels are smaller than the dimensions of the image, only a portion of the image thus being associated with the first matrix graphic code,
   wherein a complementary portion of the image that is not associated with pixels of the first graphic matrix code is added to the second graphic code.

8. Method according to claim 7, a strip of white pixels having a width of at least one module is added into the second graphic code, said strip at least partially surrounding a zone corresponding to the pixels associated between the first graphic code and the image.

9. Method according to claim 8, wherein the strip of white pixels has a width of one module.

10. Method according to one of the previous claims, wherein the first matrix graphic code comprises one of the following elements or any combination of the following elements:

    - graduated patterns for increasing the density of the first matrix graphic code;
    - separators separating the graduated patterns from the remaining portion of the first matrix graphic code;
    - alignment patterns allowing the distortion to be corrected if the first matrix graphic code is folded or curved;
    - dark patterns of a black colour, located at predefined locations of the first matrix graphic code;

    wherein the selection step is applied to the pixels of said element or of said elements of the first matrix graphic code.

11. Method according to one of the previous claims, wherein the colours of the first matrix graphic code encode:

    - a URL link to a website;
    - Wi-fi network information; or
    - a geographic position;
    - a business card;
    - an email address and the text of said address;

- a telephone number;
- a short message;
- text;
- planning of an event in a diary.

12. Computer program comprising instructions for carrying out the method according to one of claims 1 to 11, when this program is run by a processor.

13. Device for generating a customised matrix graphic code, said device comprising the following steps:

- a first interface (601) for receiving an image comprising a set of pixels;
- a second interface (602) for receiving a first matrix graphic code, said first matrix graphic code comprising a set of modules, each module comprising a set of pixels of a given colour, the code being defined by the given colour;

**characterised in that** said device further comprises
a processor (604) suitable for implementing
a step of associating each pixel of the first matrix graphic code with a pixel of the image and a step of selecting pixels of the graphic matrix for the generation of a second customised matrix graphic code, the selection step comprising the following steps, for at least one association between a first given pixel of the matrix graphic code and a second pixel of the image:

- comparing a difference between a parameter of the first pixel and a parameter of the second pixel to a predefined threshold;
- if the difference is less than or equal to the predefined threshold, adding the second pixel of the image to the second matrix graphic code;
- if the difference is greater than the predefined threshold, determining a pixel of the second matrix graphic code according to the first pixel and the second pixel.

**FIG. 1**

200
201
204
202
203

**FIG. 2a**

200
201
204
202
203

**FIG. 2b**

200
204
201
202

**FIG. 2c**

203
200
202
201
204

**FIG. 2d**

200
202
201
204

**FIG. 2e**

203
200
202
201
204

**FIG. 2f**

200 202
201

**FIG. 2g**

200 202
201

**FIG. 2h**

200 202
201

**FIG. 2i**

202
201
200

**FIG. 2j**

FIG. 3

FIG. 4

FIG. 5

FIG. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1154373 A2